# FASCICULE DE BREVET EUROPEEN

(11) **EP 1 382 102 B1**
(45) Date de publication et mention de la délivrance du brevet: **05.10.2011**
(21) Numéro de dépôt: 02722606.7
(22) Date de dépôt: 24.04.2002
(51) Int. Cl.: H02G 3/04

(54) **GAINE DE PROTECTION COMPORTANT UNE BANDE LONGITUDINALE EN MATIERE SOUPLE ET PROCEDE DE FABRICATION D'UNE TELLE GAINE**
SCHUTZUMMANTELUNG MIT EINEM LONGITUDINALEN STREIFEN AUS FLEXIBLEN MATERIAL SOWIE SEIN HERSTELLUNGSVERFAHREN
PROTECTIVE SHEATH COMPRISING A LONGITUDINAL FLEXIBLE MATERIAL STRIP AND METHOD FOR PRODUCING SAID SHEATH

(30) Priorité: 25.04.2001 FR 0105544; 05.06.2001 FR 0107291
(43) Date de publication de la demande: 21.01.2004
(73) Titulaire: Delfingen FR-Anteuil S.A., 25340 Anteuil (FR)
(72) Inventeur: COMMEAUX, Pascal, F-25110 Baume les Dames (FR); KLINKLIN, Emmanuel, F-68230 Turckheim (FR); DOMINGUES DUARTE, Domingos, 2425 ORTIGOSA (PT)
(74) Mandataire: Moinas, Michel
(86) Numéro de dépôt international: PCT/IB2002/001365
(87) Numéro de publication internationale: WO 2002/087048

(56) Documents cités:
- JP-A- 2000 115 945
- JP-A- 2000 287 331
- JP-A- 2000 287 331
- US-A- 6 096 975

## Description

La présente invention est relative à une gaine tubulaire annelée et fendue suivant une coupe longitudinale de la gaine.

Les gaines tubulaires annelées, c'est à dire celles dont la forme ressemble à une succession d'anneaux reliés les uns aux autres, sont usuellement réalisées en matières plastiques extrudées, telles le polypropylène, le polyamide ou les polyesters. Ces gaines permettent la réalisation de réseaux de protection complexes pour des faisceaux de fils ou des câbles électriques au sein de navires, d'avions ou de véhicules automobiles, et dans ce dernier cas notamment, dans le compartiment moteur. Ce type de procédé est décrit plus en détail par exemple dans les documents FR 2 171 844, GB 1 250 639 et GB 1 311 205.

Afin de permettre la mise en place des fils ou des câbles à l'intérieur de ces gaines, celles-ci sont fendues. C'est à dire qu'elles ont été coupées selon une ligne droite longitudinale en fin de procédé de fabrication. On peut alors introduire ultérieurement en n'importe quelle zone de la gaine des fils et câbles électriques directement au travers de la fente. Une des principales caractéristiques d'un tube annelé fendu est sa faculté à se refermer après ouverture, cette caractéristique étant donnée par la résilience des parois verticales des annelures.

Ces gaines de protections peuvent avoir des systèmes de fermetures plus ou moins élaborés afin d'éviter que le tube ne laisse échapper des fils en des zones de faibles rayons de courbure où la fente tend à se réouvrir. Plusieurs documents connus décrivent ces types de gaines et notamment DE-U-89 030 70, EP 0 114 213, DE 34 05552 et WO 97 323 79.

Satisfaisantes dans la majorité des cas, on constate toutefois que plusieurs inconvénients subsistent. D'une part, la force nécessaire à l'ouverture de la gaine avec ou sans système de fermeture est trop importante. Les gaines peuvent ainsi être agressives au moment de l'introduction des câbles et souvent lors de la mise en place, l'opérateur est obligé d'utiliser un outil afin de permettre, sans se blesser, l'introduction des câbles et des fils.

D'autre part, la mise en place des composants génère une déformation irréversible des annelures, alors le retour en position initiale est plus délicat. Dans ce cas, le tube peut avoir une fente de plusieurs dixièmes de millimètres (voire plusieurs millimètres) ce qui est un inconvénient pour la protection des fils ou des câbles présents à l'intérieur. La déformation permanente du tube lors de l'ouverture est liée au fait que la matière plastique est sortie de sa zone de déformation élastique.

Enfin, dans le cas des gaines avec système de fermeture, celui-ci provoque, du fait de sa forme non annelée, une rigidité qui est mal adaptée au cheminement des câbles.

La demande de brevet japonais n° JP-A-2 000 0287 331 décrit une gaine tubulaire annelée et fendue suivant une coupe longitudinale de la gaine effectuée dans une bande longitudinale en caoutchouc.

La demande de brevet japonais JP 2000 115945 divulgue une gaine tubulaire annelée et fendue comprenant une ou plusieurs rainures longitudinales disposées à 45 degrés de part et d'autre de la coupe longitudinale. Les rainures s'étendent de la crête au creux des cannelures sans toutefois traverser la paroi formant la base commune du creux des cannelures pour fonctionner comme des charnières facilitant l'introduction des câbles à l'intérieur de la gaine fendue.

La demande de brevet européen EP 859 440 divulgue une gaine tubulaire annelée et fendue comprenant des cannelures de hauteur réduite dans la région où la coupe longitudinale est réalisée pour créer un effet de charnière entre chaque bord de fente et le reste du pourtour de la gaine. Il en résulte une plus grande facilité d'introduction des câbles à l'intérieur de la gaine fendue.

Dans ces deux exemples connus, l'effet de charnière résulte d'une réduction de l'épaisseur de la gaine. Cette réduction d'épaisseur peut entraîner une usure et un déchirement de la gaine dans la région de la charnière.

Le but de l'invention est de palier les inconvénients indiqués précédemment.

A cet effet, l'invention a pour objet une gaine tubulaire annelée et fendue suivant une coupe longitudinale de la gaine, comprenant une bande longitudinale réalisée en matière souple, cette gaine se caractérisant en ce que la bande longitudinale occupe une position angulaire comprise entre 5 et 180 degrés par rapport à la coupe longitudinale.

Lorsque la position angulaire de la bande en matière souple est comprise entre 5 et 180 degrés, elle procure un effet de charnière facilitant l'introduction des câbles à l'intérieur de la gaine fendue. Lorsque la coupe longitudinale de la gaine est réalisée dans la bande en matière souple, les deux bords de fente se déforment facilement et sont rendus beaucoup moins agressifs pour un opérateur ou pour les câbles eux-mêmes lors de leur introduction dans la gaine.

D'autres avantages de l'invention apparaîtront à la lecture de la description de deux modes de réalisation illustrés par les dessins. Les figures 1 à 3 se rapportent à un premier mode d'exécution de l'invention. Les figures 4 et 5 se rapportent à un deuxième mode d'exécution. Les figures 6 et 7 se rapportent à un dispositif de mise en oeuvre d'un procédé de fabrication d'une gaine selon le premier ou le deuxième mode d'exécution de l'invention.

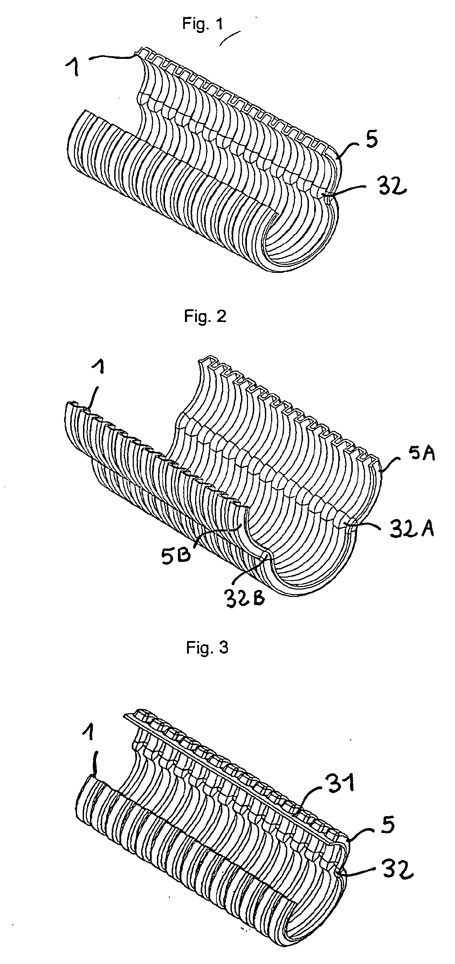

Plus précisément, la figure 1 est une vue en perspective d'une gaine avec une seule bande longitudinale souple.
La figure 2 est une vue en perspective d'une gaine avec deux bandes longitudinales souples symétriques par rapport à la fente de la gaine.
La figure 3 est une vue en perspective d'une gaine ayant une languette de fermeture en matière souple permettant l'ouverture de la gaine.

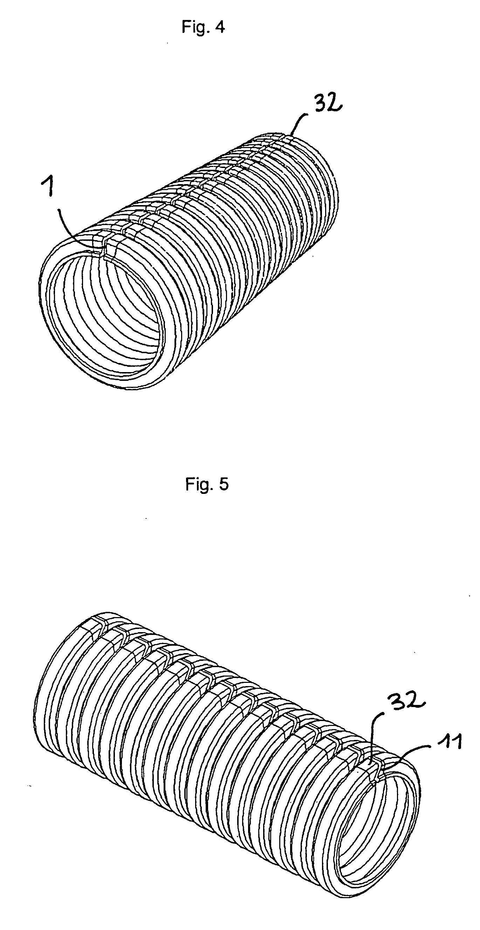

La figure 4 est une vue en perspective d'une gaine ayant une coupe longitudinale réalisée dans une région en matière souple.
La figure 5 est une vue en perspective d'une gaine ayant une coupe longitudinale réalisée dans une région en matière souple, la fente étant en biais.

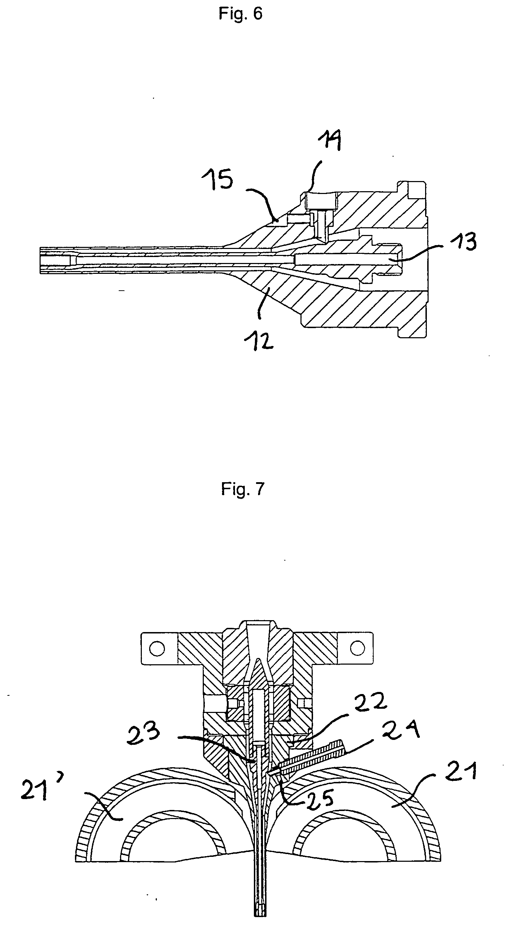

La figure 6 est une vue schématique d'un poinçon-filière d'une tête d'extrusion.
La figure 7 est une vue schématique d'une tête d'extrusion ainsi qu'une partie d'une mouleuse.

Une gaine tubulaire annelée et fendue suivant une coupe longitudinale 1 de la gaine est représentée par les figures 1 à 3 et par les figures 4 et 5.

Selon un premier mode d'exécution de l'invention, figures 1 à 3, une partie de la gaine se présentant sous la forme d'une bande longitudinale 32 est en matière souple, par exemple en élastomère thermoplastique. La partie souple est située à environ 50 degrés de la fente de la gaine. Cette partie souple étant limitée à une zone restreinte du périmètre, elle ne modifie pas les caractéristiques du produit d'origine. Par contre, elle procure à la gaine un effet de charnière ou, qui permet l'ouverture de celle-ci avec un effort beaucoup moins important et évite donc l'utilisation d'un outil. Sur les figures 1 à 3, la gaine est représentée en position ouverte. Sur les figures 1 et 3, un bord de fente 5 est relevé vers l'extérieur par pivotement autour de la bande longitudinale 32 en matière souple agissant à la manière d'une charnière. Sur la figure 2, les deux bords de fente 5A et 5B sont relevés vers l'extérieur par pivotement autour des bandes longitudinales 32A et 32B.

L'élasticité de la matière souple utilisée permet une très bonne fermeture de la gaine et un retour systématique en position fermée. Les déformations élastiques permises sur la matière coextrudée sont en effet beaucoup plus importantes que sur la matière principale de la gaine.

Il convient de noter que la bande longitudinale en matière souple peut également est abaissée vers l'intérieur de la gaine et fonctionner ainsi à la manière d'un clapet lors l'introduction des composants.

Afin de permettre la mise en place de composants de diamètres équivalents au diamètre intérieur de la gaine sans déformer celle-ci, comme expliqué précédemment, on réalise de préférence deux co-extrusions de matière souple sur une même gaine. Ces deux bandes de matière souple 32A et 32B sont symétriques par rapport à la fente longitudinale. Par l'intermédiaire de ce double effet de charnière, on multiplie par deux l'ouverture de la gaine sans déformation irréversible.

Selon un deuxième mode d'exécution de l'invention, figures 4 et 5, une partie 32 du tube où est située la coupe longitudinale 1 est en matière souple, par exemple en élastomère thermoplastique. Cette zone en matière souple évite l'agression que peut provoquer la fente associée à la présence des cannelures de la gaine. De surcroît, cette partie souple étant limitée à une zone restreinte du périmètre, elle ne modifie pas les caractéristiques du produit d'origine et notamment la rigidité transversale. La coupe longitudinale réalisée dans la bande en matière souple permet avantageusement d'éliminer totalement le bruit de frottement des deux bords de fente observé habituellement sur les gaines connues de l'art antérieur.

Selon une variante d'exécution, la région de la gaine en matière souple dans laquelle la coupe longitudinale est réalisée comprend une languette non annelée, continue et longitudinale, ménagée sur un des bords de la fente et logée au niveau du creux des cannelures de la gaine. Cette languette en matière souple possède une faible largeur, par exemple quelques millimètres, et supprime la zone rigide qui existe lorsque la languette est fabriquée dans le même matériau que la gaine, provoquant ainsi une rigidité importante de la gaine et générant lors de la courbure de celle-ci des "plits".

De préférence, la coupe longitudinale de la gaine réalisée dans la bande de matière souple 32 est orientée en biais. Une telle fente en biais 11 offre l'avantage d'un comportement à la courbure amélioré par rapport à une gaine connue de l'art antérieur dans la mesure où la gaine reste fermée pour des courbures plus importantes. Le fait de réaliser ce profil de fente dans la bande de matière souple retire aux bords de fente tout caractère agressif.

Une gaine selon le premier ou le deuxième mode d'exécution de l'invention est fabriquée selon un procédé de fabrication par extrusion de matière plastique, la bande longitudinale en matière souple étant obtenue par coextrusion d'un matériau élastomère.

Dans le cas d'une gaine selon le premier mode d'exécution, la coextrusion est positionnée sur une génératrice se trouvant à un angle pouvant varier entre 5 et 180 degrés de l'endroit où la coupe longitudinale de la gaine est réalisée. Selon un mode de réalisation préféré, on positionne la coextrusion approximativement à 50 degrés de la fente et la largeur de la coextrusion représente entre 0,5 et 10 mm de préférence entre 2 et 5 mm. Ce mode de réalisation est adapté à une gaine standard ou à une gaine possédant une languette de fermeture 31, visible sur la figure 3.

Dans le cas d'une gaine selon le deuxième mode d'exécution, la gaine est fabriquée par une coextrusion ayant lieu strictement à l'endroit où la coupe longitudinale du tube est réalisée pour une gaine de protection sans système de fermeture ou par une coextrusion en matière souple de la zone où est située la languette de fermeture pour une gaine possédant une telle languette. La fente sera alors réalisée à l'endroit où se trouve la matière souple.

De préférence, pour les gaines sans système de fermeture, la largeur de la coextrusion représente entre 1/12 et 1/3 du diamètre interne de la gaine, de préférence entre 1/10 et 1/6 du diamètre interne. A titre d'exemple, la largeur de coextrusion varie entre 0,5 mm et 10 mm, de préférence entre 2 mm et 5 mm. Pour les gaines avec système de fermeture, la largeur de la coextrusion représente entre 1/10 et 1/2 du diamètre interne de la gaine, de préférence entre 1/6 et 1/3 du diamètre interne.

Par rapport à un procédé de fabrication d'une gaine annelée fendue standard, le procédé par coextrusion ne nécessite qu'une modification de la tête d'extrusion afin de permettre l'arrivée de la seconde matière élastomère thermoplastique sur le profil initial avant d'une mouleuse. Dans le cadre d'une fabrication comportant deux bandes de matière souple, il faut doubler le dispositif de coextrusion sur la tête d'extrusion.
La figure 6 illustre un poinçon-filière d'une tête d'extrusion. Le repère 14 désigne l'insert où est positionnée la coextrusion au sein de la filière 12. Le repère 13 désigne le poinçon. Afin de permettre une coextrusion sur la totalité de l'épaisseur de paroi de la gaine annelée, l'insert 14 permettant le positionnement de la coextrusion vient en butée sur le poinçon 13, bloquant ainsi le flux de la matière principale. L'extrémité oblique du repère 14 favorise l'orientation de la matière souple. Le repère 15 désigne le positionnement d'un blocage mécanique permettant l'orientation de l'insert de coextrusion 14.
La figure 7 illustre une tête d'extrusion avec une partie d'une mouleuse comprenant deux séries de coquilles 21 et 21' parallèles et symétriques. Le repère 24 montre la coextrusion positionnée au sein de la filière 22, en butée sur le poinçon 23 et orientée par l'insert mécanique 25. Dans le cas d'une gaine selon le deuxième mode d'exécution de l'invention, la coextrusion est positionnée dans le même plan horizontal de circulation des demi-coquilles.

Une gaine selon l'invention reste peu coûteuse à fabriquer par le procédé de coextrusion.

## Revendications

1. Gaine tubulaire annelée et fendue suivant une coupe longitudinale (1) de la gaine, comprenant une bande longitudinale (32) réalisée en matière souple, **caractérisée en ce que** la bande longitudinale (32) occupe une position angulaire comprise entre 5 et 180 degrés par rapport à la coupe longitudinale (1).

2. Gaine tubulaire selon la revendication 1, **caractérisée en ce que** la matière souple est un élastomère thermoplastique.

3. Gaine tubulaire selon la revendication 1 ou 2, **caractérisée en ce que** la coupe longitudinale (1) de la gaine réalisée dans la bande de matière souple est orientée en biais.

4. Gaine tubulaire fendue selon l'une des revendications 1 à 3, **caractérisée en ce qu'**elle comporte en outre une région en matière souple dans laquelle est réalisée la coupe longitudinale (1) et **en ce que** cette région comprend une languette (31) non annelée, continue et longitudinale, ménagée sur un des bords de la fente (1) et logée au niveau du creux des cannelures de la gaine.

5. Gaine tubulaire fendue selon l'une des revendications 1 à 4, **caractérisée en ce que** la bande longitudinale (32) occupe une position angulaire d'environ 50 degrés par rapport à la coupe longitudinale (1).

6. Gaine tubulaire fendue selon l'une des revendications 1 à 5, **caractérisée en ce qu'**elle comprend deux bandes de matière souple (32A, 32B).

7. Gaine tubulaire fendue selon la revendication 6, **caractérisée en ce que** les deux bandes de matière souple (32A, 32B) sont symétriques par rapport à la fente longitudinale (1).

8. Procédé de fabrication par extrusion de matière plastique d'une gaine tubulaire annelée et fendue suivant une coupe longitudinale (1) telle que définie dans l'une des revendications 1 à 7, **caractérisé en ce qu'**une bande longitudinale (32) en matière souple est obtenue par co-extrusion d'un matériau élastomère de façon à ce que la bande longitudinale (32) en matière souple occupe une position angulaire comprise entre 5 et 180 degrés par rapport à la coupe longitudinale (1).

9. Procédé de fabrication selon la revendication 8, **caractérisée en ce que** la bande longitudinale (32) occupe une position angulaire d'environ 50 degrés par rapport à la coupe longitudinale (1).

10. Dispositif pour la mise en oeuvre d'un procédé selon la revendication 8 ou 9, **caractérisé en ce qu'**il comprend une tête d'extrusion (10,20) comportant un insert (14,24) de position de la co-extrusion en butée sur un poinçon (13,23) pour bloquer le flux de la matière plastique extrudée et permettre le flux du matériau élastomère.

## Claims

1. Ringed tubular sheath which is slit along a longitudinal cut (1) in the sheath, comprising a longitudinal strip (32) made of flexible material, **characterised in that** the longitudinal strip (32) occupies an angular position of between 5 and 180 degrees in relation to the longitudinal cut(1).

2. Tubular sheath according to claim 1, **characterised in that** the flexible material is a thermoplastic elastomer.

3. Tubular sheath according to either claim 1 or claim 2, **characterised in that** the longitudinal cut (1) in the sheath which is made in the strip of flexible material is orientated on the slant.

4. Slit tubular sheath according to any one of claims 1 to 3, **characterised in that** it further comprises a region made of flexible material in which the longitudinal cut (1) is made, and **in that** this region comprises a longitudinal, continuous, non-ringed narrow tongue (31) which is arranged on one of the edges of the slit (1) and accommodated at the level of the trough of the corrugations of the sheath.

5. Slit tubular sheath according to any one of claims 1 to 4, **characterised in that** the longitudinal strip (32) occupies an angular position of approximately 50 degrees in relation to the longitudinal cut (1).

6. Slit tubular sheath according to any one of claims 1 to 5, **characterised in that** it comprises two strips made of flexible material (32A, 32B).

7. Slit tubular sheath according to claim 6, **characterised in that** the two strips made of flexible material (32A, 32B) are symmetrical about the longitudinal slit (1).

8. Method of manufacturing, by the extrusion of plastic material, a ringed tubular sheath which is slit along a longitudinal cut (1) as defined in any one of claims 1 to 7, **characterised in that** a longitudinal strip (32) made of flexible material is obtained by co-extrusion of an elastomer material in such a way that the longitudinal strip (32) made of flexible material occupies an angular position of between 5 and 180 degrees in relation to the longitudinal cut (1).

9. Manufacturing method according to claim 8, **characterised in that** the longitudinal strip (32) occupies an angular position of approximately 50 degrees in relation to the longitudinal cut (1).

10. Device for implementing a method according to either claim 8 or claim 9, **characterised in that** it comprises an extrusion head (10, 20) having an insert (14, 24) for positioning the co-extrusion in abutment against a die (13, 23) so as to block the flow of extruded plastic material and permit the flow of the elastomer material.

## Patentansprüche

1. Röhrenartige Ummantelung, die ringartig ausgebildet und entlang eines Schnittes (1) in Längsrichtung der Ummantelung geschlitzt ist, mit einem sich in Längsrichtung erstreckenden Streifen (32), der aus einem flexiblen Material hergestellt ist, **dadurch gekennzeichnet, dass** der sich in Längsrichtung erstreckende Streifen (32) in Bezug auf den sich in Längsrichtung erstreckenden Schnitt (1) eine winklig ausgerichtete Stellung zwischen 5 und 180 Grad einnimmt.

2. Röhrenartige Ummantelung nach Anspruch 1, **dadurch gekennzeichnet, dass** das flexible Material ein thermoplastisches Elastomer ist.

3. Röhrenartige Ummantelung nach Anspruch 1 oder 2, **dadurch gekennzeichnet, dass** der sich in Längsrichtung erstreckende Schnitt (1) der Ummantelung, der in dem Streifen aus flexiblem Material ausgeführt ist, schräg ausgerichtet ist.

4. Geschlitzte röhrenartige Ummantelung nach einem der Ansprüche 1 bis 3, **dadurch gekennzeichnet, dass** sie weiterhin einen Bereich aus einem elastischen Material aufweist, in dem der sich in Längsrichtung erstreckende Schnitt (1) ausgeführt ist, und dass dieser Bereich eine nicht ringförmige Zunge (31) aufweist, die durchgehend und sich in Längsrichtung erstreckend an einem der Ränder des Schlitzes (1) vorgesehen und im Bereich der Vertiefung der Rillen der Ummantelung angeordnet ist.

5. Geschlitzte röhrenartige Ummantelung nach einem der Ansprüche 1 bis 4, **dadurch gekennzeichnet, dass** der sich in Längsrichtung erstreckende Streifen (32) in Bezug auf den sich in Längsrichtung erstreckenden Schnitt (1) eine winklig ausgerichtete Stellung von etwa 50 Grad einnimmt.

6. Geschlitzte röhrenartige Ummantelung nach einem der Ansprüche 1 bis 5, **dadurch gekennzeichnet, dass** sie zwei Streifen (32A, 32B) aus einem flexiblen Material aufweist.

7. Geschlitzte röhrenartige Ummantelung nach Anspruch 6, **dadurch gekennzeichnet, dass** die beiden Streifen (32A, 32B) aus einem flexiblen Material in Bezug auf den sich in Längsrichtung erstreckenden Schlitz (1) symmetrisch sind.

8. Verfahren zum Herstellen einer röhrenartigen Ummantelung gemäß einem der Ansprüche 1 bis 7 über Extrusion eines Kunststoffmaterials, die ringartig ausgebildet und entlang eines sich in Längsrichtung erstreckenden Schnittes (1) geschlitzt ist, **dadurch gekennzeichnet, dass** ein sich in Längsrichtung erstreckender Streifen (32) aus einem flexiblen Material durch Koextrusion eines Elastomermaterials dergestalt erhalten wird, dass der sich in Längsrichtung erstreckende Streifen (32) aus flexiblem Material in Bezug auf den sich in Längsrichtung erstreckenden Schnitt (1) eine winklig ausgerichtete Stellung zwischen 5 und 180 Grad einnimmt.

9. Herstellungsverfahren nach Anspruch 8, **dadurch gekennzeichnet, dass** der sich in Längsrichtung erstreckende Streifen (32) in Bezug auf den sich in Längsrichtung erstreckenden Schnitt (1) eine winklig ausgerichtete Stellung von etwa 50 Grad einnimmt.

10. Vorrichtung zum Durchführen eines Verfahrens nach Anspruch 8 oder 9, **dadurch gekennzeichnet, dass** sie einen Extrusionskopf (10, 20) aufweist, der über einen Einsatz (14, 24) verfügt, der in Koextrusionsstellung in Anschlag an einen Dorn (13, 23) ist, um den Strom an extrudiertem Kunststoffmaterial zu blockieren und den Strom an Elastomermaterial zu gestatten.
